# EUROPEAN PATENT APPLICATION

(11) **EP 4 786 929 A1**
(43) Date of publication of application: **05.08.2026**
(21) Application number: 25155305.3
(22) Date of filing: 31.01.2025
(51) Int. Cl.: G01F 13/00, B65B 1/36, B65B 1/48, B65B 37/20, B65B 43/60, B65B 43/50

(54) **TELESCOPIC DOSING CUP FOR A VOLUMETRIC FILLING MACHINE**

(71) Applicant: The Procter & Gamble Company, Cincinnati, OH 45202 (US)
(72) Inventor: COOK, Antony Peter, WEST THURROCK, GRAYS, ESSEX, RM204AL (GB)
(74) Representative: P&G Patent Belgium UK

(57) **Abstract**

Examples relate to a telescopic dosing cup (10) for a volumetric filling machine (34) configured to measure and/or dose a volume of powder or granular detergent material, the telescopic dosing cup (10) comprising: at least a first and second pair of telescopically arranged cylinders (12, 14) being configured to be mounted to a rotary table (36); a first chamber (24) defined by the first pair of telescopically arranged cylinders (12) configured to hold and transport a first volume (V1) of material; a second chamber (26) defined by the second pair of telescopically arranged cylinders (14) configured to hold and transport a second volume (V2) of material, wherein the first volume (V1) and the second volume (V2) are adjustable by relative sliding movement of the cylinders in each pair, and wherein the first volume (V1) is different from the second volume (V2)..

## Description

### TECHNICAL FIELD

The present disclosure relates to the field of dosing cups in volumetric filling machines configured to dose and/or measure a volume of powder or granular detergent material

### BACKGROUND ART

Volumetric filling machines are widely used for producing and packaging powder or granular detergents, as they reliably deliver precise quantities of product.

### BRIEF DESCRIPTION OF DRAWINGS

Figure 1A and 1B illustrate an example of a telescopic dosing cup for a volumetric filling machine in a deployed position. In Figure 1A, the dosing cup is in a deployed position. In Figure 1B, the dosing cup is in a contracted position.
Figure 2A and 2B illustrate an example of a telescopic dosing cup for a volumetric filling machine comprising a base plate and a support plate. In Figure 2A, the dosing cup is in a deployed position. In Figure 2B, the dosing cup is in a contracted position.
Figure 3 illustrates an example of a cross-section of an inlet section of a telescopic dosing cup.
Figure 4 illustrates an example of a cross-section of an outlet section of a telescopic dosing cup.
Figures 5A, 5B, 5C and 5D show different configurations of an example of a telescopic dosing cup comprising a closing element.
Figures 6A, 6B, 6C and 6D illustrate alternative examples of cross-sections of a telescopic dosing cup.
Figure 7 illustrates a top view of an example of a volumetric filling machine.
Figure 8 illustrates an example of a method for adjusting the volume of granular or powder detergent product
Figure 9 illustrates an example of a volumetric filling method.

### DESCRIPTION OF EMBODIMENTS

An important component in volumetric filling machines is the dosing cup, which can be designed as a cylindrical or slightly tapered container with a fixed internal volume. The dosing cup serves to measure and dispense consistent quantities of a material, such as powder or granular detergent material.

A plurality of dosing cups can be mounted to a rotating table or sliding mechanism within the volumetric filling machine. As the machine operates, each dosing cup progresses through a defined cycle, in which material is filled into the cup, leveled to maintain uniformity, and then emptied from the dosing cup into packaging containers. The cycle is repeated to maintain high productivity and ensure consistent filling of packaging containers.

However, dosing cups can lack the flexibility to accommodate variability in material properties. Granular and powder detergent materials can exhibit inconsistent flow characteristics due to factors such as humidity, particle size, or density. These variations can compromise the dosing accuracy of the volume measured.

Further, despite their effectiveness for single-volume operations, dosing cups have limitations when adjustments to the dosing volume are needed. Changing the dosing volume requires operators to replace the dosing cups with alternatives of a different size, a process that introduces significant inefficiencies. The changeover is time-consuming and labor-intensive, often resulting in extended machine downtime and increased production costs.

The difficulties in changeovers can be exacerbated by the construction of the dosing cups and their placement within the volumetric filling machine. If made from stainless steel, the dosing cups are heavy and cumbersome to handle, further complicating the replacement process. Their position within the machine often limits accessibility, requiring operators to work in confined spaces during dosing cup changeovers.

Additionally, powder or granular detergent materials may contain components such as enzymes, and exposure of operators to such components should be reduced or avoided.

It has been considered to design dosing cups as a single telescopic cylinder to allow for adjustable volumes in the volumetric filling machine. However, this design is limited in the range of volume variations it can achieve. Such dosing cups are unsuitable for accommodating a wide variety of volume requirements encountered with diverse packaging formats. They are impractical in environments requiring frequent and substantial adjustments to dosing volumes, as frequent changeovers are still necessary. In particular, a single telescopic cylinder design was found to offer a limited range of volumes, and a limited precision in terms of volume setting.

The present disclosure addresses this situation and aims to provide a telescopic dosing cup configured to measure and/or dose a volume of powder or granular detergent product which can accommodate a wide range of volume requirements and can increase precision in volume setting.

By measuring, it is to be understood the process of determining a volume of granular or powder detergent material. By dosing, it is to be understood the act of administering a particular volume of powder or granular detergent material. In some cases, the telescopic dosing cup is configured to measure and dose a volume of granular or powder detergent material.

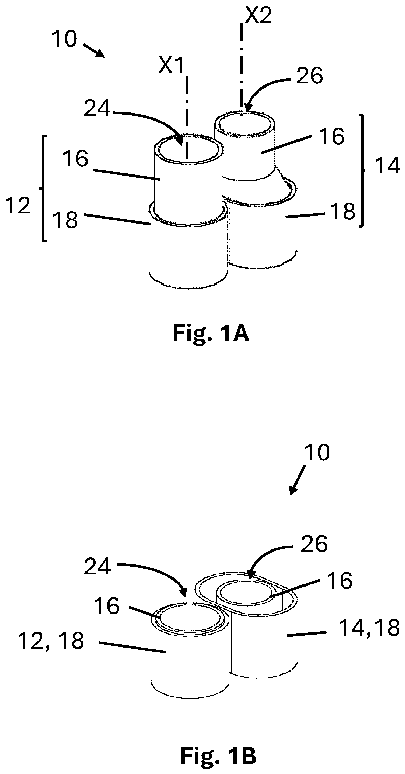

Figures 1A and 1B illustrate an example of a telescopic dosing cup 10. The telescopic dosing cup 10 may be configured to be mounted to a rotary table as part of a volumetric filling machine, as will be described in more detail later. In Figure 1A, the dosing cup 10 is in a fully deployed position. On the contrary, in Figure 1B, the dosing cup 10 is in a fully contracted position.

The telescopic dosing cup 10 comprises at least a first pair of telescopically arranged cylinders 12 and a second pair of telescopically arranged cylinders 14. The first and second pair of cylinders 12, 14 extend parallel to each other, with each pair configured to extend along an axis X1, X2 perpendicular to a base plane defined by the rotary table. Therefore, each pair of telescopically arranged cylinders 12, 14 may be configured to transfer material from a hopper or feeder positioned above the rotary table to a packaging container located below the rotary table.

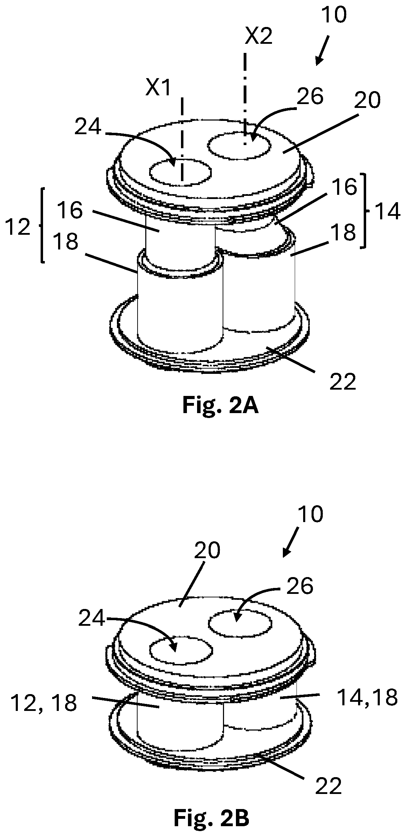

Each pair of cylinders 12, 14 comprises an upper cylinder 16 and a lower cylinder 18, wherein the lower cylinder 18 is slidably disposed relative to the upper cylinder 16. In the example illustrated in Figures 1 and 2, the upper cylinder 16 is slidably disposed within the lower cylinder 18. Alternatively, the lower cylinder 18 may be slidably disposed within the upper cylinder 16. Any configuration of slidable cylinders is possible, provided it allows relative movement of one cylinder with respect to the other along their common axis of extension X1, X2. Therefore, the dosing cup 10 may be moved from the deployed position (for example, as shown in Figure 1A) to the contracted position (for example, as shown in Figure 1B), or from the contracted position to the deployed position, by sliding one of the lower cylinder 18 and the upper cylinder 16 relative to the other of the upper cylinder 16 and the lower cylinder 18.

The pair of telescopically arranged cylinders 12, 14 may be in a fixed relationship (i.e. fixed together). In other words, telescoping one of the pair of cylinders 12, 14 also telescopes the other pair of cylinders 12, 14. In the example of figures 1 and 2, the upper cylinder 16 of the first and second pair of cylinders 12, 14 are integrally formed or rigidly fixed together; and the lower cylinder 18 of the first and second pair of telescopically arranged cylinders 12, 14 are integrally formed or rigidly fixed together. Alternatively, each pair of telescopically arranged cylinders 12, 14 may operate independently, allowing independent telescoping adjustments within the dosing cup 10.

The upper cylinder 16 of each pair of cylinders 12, 14 may be configured to be mounted on the rotary table. In the example of figures 2A and 2B, the upper cylinder 16 of each pair of telescopically arranged cylinder 12, 14 is fixed or integral to a dedicated base plate 20. The dedicated base plate 20 is configured to allow mounting the telescopic dosing cup 10 to the rotary table, for example by screws, bolts, clamps, latches, bayonet fittings or slide-in grooves.

Further, in the example of figures 2A and 2B, the lower cylinder 18 of each pair of cylinders 12, 14 may be fixed or integral to a support plate 22. The support plate 22 may serve to rigidly fix the lower cylinder 18 of the first and the second pair of telescopically arranged cylinders 12, 14 together.

The first pair of telescopically arranged cylinders 12 define a first chamber 24, and the second pair 14 define a second chamber 26. The first chamber 24 is configured to hold and transport a first volume V1 of granular or powdered detergent material, and the second chamber 26 is configured to hold and transport a second volume V2 of granular or powdered detergent material. The first and second volumes V1, V2 are different, and each volume can be adjusted by telescoping the cylinders of the pair of cylinders 12, 14. Therefore, the telescopic dosing cup 10 can measure and dose a wide range of volumes. To dose a specific volume, one or both pairs of cylinders 12, 14 may be selected. Then, the specific volume can be precisely defined by positioning the dosing cup 10 in the deployed position, the retracted position, or an intermediate position between the deployed and the retracted positions. This allows the telescopic dosing cup 10 to accommodate a wide range of products, each requiring different volumes.

The ratio of the first volume V1 in the contracted position to the first volume V1 in the deployed position, and the ratio of the second volume V2 in the contracted position to the second volume V2 in the deployed position, can each range between 2:1 and 3:1. In some examples, the first volume V1 may vary as follows between the contracted and deployed positions: from 0.5 L to 1.5 L, from 0.5 L to 1 L, from 1 L to 2 L, from 1 L to 3 L, from 1.5 L to 3 L. Similarly, in some examples, the second volume V2 may range from 1 L to 2 L, from 1 L to 3L, from 2 L to 4 L, from 2 L to 6 L. Other ranges may be considered. In Figure 1A, where the dosing cup 10 is in the deployed position, the first volume V1 may be 1.5 L, the second volume V2 may be 4.5 L, and the combined volume V1+V2 of the first and second volumes may be 6 L. In Figure 1B, where the dosing cup 10 is in contracted position, the first volume V1 may be 0.5 L, the second volume V2 may be 1.5 L, and the combined volume V1+V2 may be 2 L. One or both pairs of cylinders 12, 14 may be selected to dose different volume requirements for different products. Specific volumes within the above ranges can be achieved by telescoping the pair of cylinders 12, 14.

The first and second volumes V1, V2 may be determined by the shape of each chamber 24, 26 (i.e. the shape of the pair of cylinders 12, 14), the height of each chamber 24, 26 (or pair of cylinders 12, 14) and a range of relative sliding movement of the telescopically arranged cylinders 12, 14.

The height of each chamber 24, 26 may be determined by the specifications of the volumetric filling machine. For instance, the maximum height of each chamber 24, 26 can be comprised between 180 mm to 330 mm. In some examples, the height of the first chamber 24 is the same as the height of the second chamber 26. Therefore, integration of the pair of telescopically arranged cylinders 12, 14 in the volumetric filling machine may be facilitated.

The range of relative sliding movement of the first pair of telescopically arranged cylinders 12 and the second pair of telescopically arranged cylinders 14 may also be determined by the specifications of the volumetric filling machine. In some examples, the range of relative sliding motion may be between 50 mm and 200 mm. In some examples the relative sliding motion is of approximately 150 mm. In some examples, the range of relative sliding movement is the same in both pairs of telescopically arranged cylinders 12, 14, facilitating integration and operation within the volumetric filling machine.

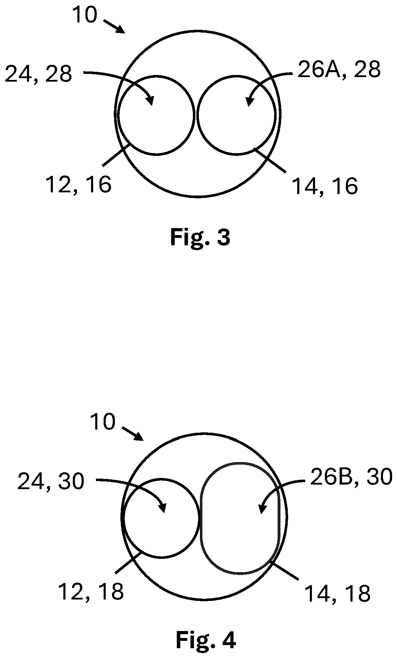

The shape of each chamber 24, 26 may be configured to create the difference in the first and second volumes V1, V2 in the first and second chambers 24, 26. In the example illustrated in Figures 1A and 1B, the first chamber 24 has a circular cross-section along its entire height (see the cross-sectional views in Figures 3 and 4 along a plane parallel to the base plane). In this case, both the upper and lower cylinders 16, 18 of the first pair of cylinders 12 defining the first chamber 24 are circular cylinders nested within each other. The second chamber 26 comprises two segments: a first segment 26A with a circular cross-section (see Figure 3) and a second segment 26B with an oblong cross-section (see Figure 4). These segments are connected by a tapered section that transitions between the two segments 26A, 26B. In this case, the lower cylinder 18 of the second pair of cylinders 14 may be oblong and the upper cylinder 16 of the second pair of cylinders 14 may comprise both a circular section and an oblong section, with a tapered section connecting the two. The oblong section of the upper cylinder 16 may nest inside the lower cylinder 18. The difference in shape allows the second chamber 26 to have a second volume V2 which is bigger than the first volume V1 of the first chamber 24.

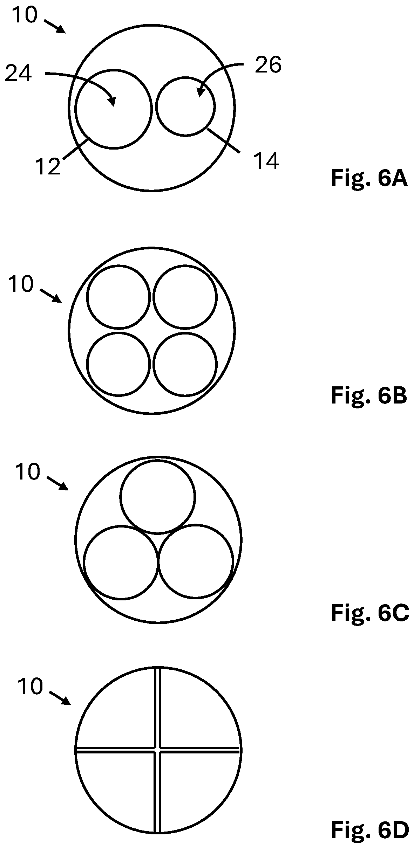

The shape of each chamber 24, 26 is not limited to the above example. Each chamber 24, 26 may have any shape which enables the first chamber 24 to have a different volume to the volume of second chamber 26. For instance, both chambers 24, 26 may have circular cross-sections with different diameters (see Fig. 6A for example), or one or both chambers 24, 26 may taper to different diameters. Additionally, one or both chambers 24, 26 may have a polygonal cross-section (e.g., triangular, quadrilateral, pentagonal), elliptical, or wedge shape cross-sections. The two chambers 24, 26 may have the same shape with different dimensions. The two chambers may also have different shapes.

Each chamber 24, 26 may extend between an inlet section 28 and an outlet section 30. The inlet section 28 is configured to receive the powder or granular material. The inlet section 28 may be be fluidically connected to a hopper or feeder above the rotary table. The outlet section 30 is configured to dispense the powder or granular detergent material, for example into the packaging container below the rotary table. In some examples, the inlet section 28 of both the first and second chambers 24, 26 have the same size and shape. In other words, the cross-section of the inlet section 28 of each of the first chamber 24 and the second chamber 26 may be identical. This allows the inlet sections to share a single hopper or feeder connection and enables the use of a common closing element 32. In the example of Figure 3, both inlet sections 28 have the same circular cross-section.

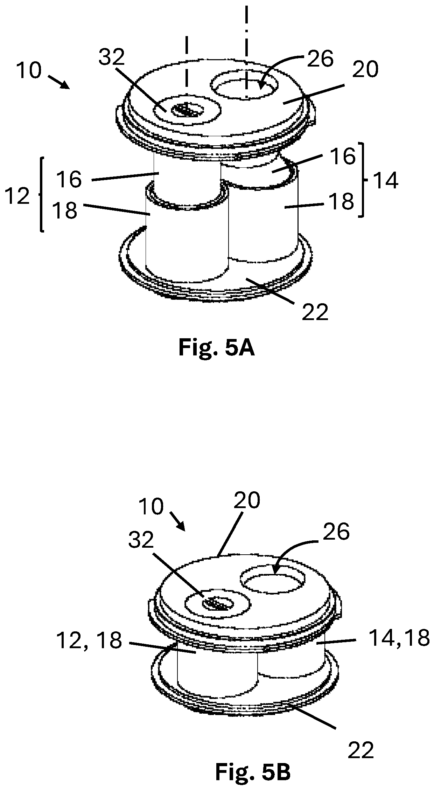

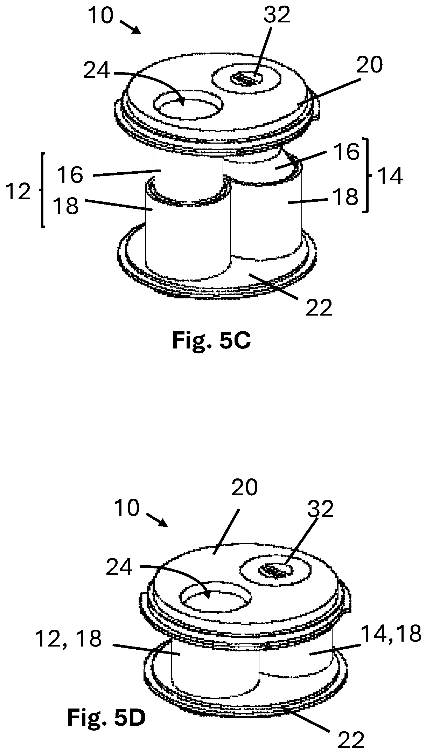

The closing element 32 may be selectively removably inserted into the inlet section 28 of either the first or the second chamber 24, 26. For example, the closing element 32 may be a plug. In the examples of Figure 5A and 5B, the closing element 32 is inserted into the inlet section 28 of the first chamber 24, so that only the second chamber 26 can be filled with granular or powdered detergent material when the volumetric filling machine is in use. In figure 5A, the dosing cup 10 is in the deployed position, whereas in figure 5B, the dosing cup 10 is in the retracted position, so that a range of second volumes V2 may be accommodated in the second chamber 26. In the examples of Figures 5C and 5D, the closing element 32 is inserted into the inlet section 28 of the second chamber 26, allowing only the first chamber 24 to be filled with granular or powdered detergent material. In figure 5C, the dosing cup 10 is in the deployed position, whereas in figure 5D, the dosing cup 10 is in the retracted position, so that a range of first volumes V1 may be accommodated in the first chamber 24. The closing element 32 enables the selection of which cylinder or combination of cylinders is used to dose a specific volume of granular or powdered detergent material. The specific volume to be dosed may further be defined by the telescoping feature of the telescopic dosing cup 10.

In some examples, the telescopic cup 10 may comprise a gate mounted to the outlet section 30 of each chamber 24, 26. The gate may be configured to selectively open and close the outlet section 30 of each chamber 24, 26. When the gate is closed, the chambers 24, 26 may be filled with powder or granular detergent material. On the contrary, in the open position, material may flow out of the outlet section 30, for example to be poured into a packaging container.

The number of pairs of telescopically arranged cylinders is not limited to the example described above. Figures 6B-6D illustrate alternative examples of telescopic dosing cups 10. The telescopic dosing cup 10 in Figure 6B comprises three pairs of telescopically arranged cylinders, while the dosing cup in Figures 6C and 6D comprises four pairs of such cylinders. In Figure 6C, the cross-section of the different pairs of cylinders is circular, whereas in Figure 6D, the cross-section of the pairs of cylinders is wedge-shaped.

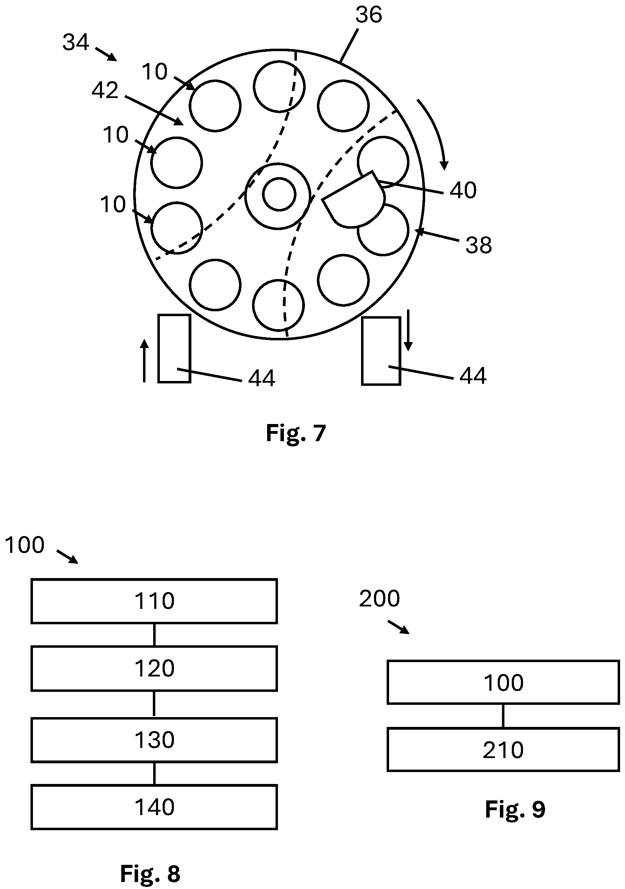

Figure 7 illustrates an example of a volumetric filling machine 34. The volumetric filling machine 34 may comprise a rotary table 36 which is configured to rotate about a central axis Y, at least one telescopic dosing cup 10 such as described above mounted to the rotary table 36. The central axis Y is normal to the base plane defined by the rotary table 36. In some examples, five to twenty telescopic dosing cups 10 are mounted to the rotary table 36. In some examples eight to fifteen telescopic dosing cups 10 are mounted to the rotary table 36. The telescopic dosing cups 10 may be regularly angularly spaced around the circumference of the rotary table 36. The productivity of the volumetric filling machine 36 may be increased with the number of telescopic dosing cups 10.

Around the circumference of the volumetric filling machine 34, there may be provided a filling area 38. The filling area 38 may extend over a portion of the rotary table 36. The filling area 38 may be configured for filling at least one chamber of each telescopic dosing cup 10 during rotation of the rotary table 36 about the central axis Y. The filling area 38 may comprise a hopper or feeder 40 in which granular or powder material is stored. A connector may connect the hopper or feeder 40 to the inlet section 28 of the one or more chambers to be filled. Granular or powder material may be transferred from the hopper or feeder 40 to at least one chamber. The one or more chambers to be filled may for example be selected by fitting a closing element 32 in the inlet section of the remaining chambers.

A discharge area 42 may extend over another portion of the rotary table 36. The discharge area 42 may be configured to discharge the powder or granular detergent material from at least one of the first chamber and the second chamber 24, 26 of each telescopic dosing cup 10 into a packaging container 44 during rotation of the rotary table 36 about the central axis Y. For example, a gate may open at the outlet section 30 of the chambers filled with granular or powder material when the dosing cup 10 reaches the discharge area 42. The gate may allow material to flow from the outlet of the one or more chambers into the packaging containers 44 to be filled with material.

A method 100 for adjusting the volume of granular or powder detergent product is illustrated on Figure 8. The method 100 may comprise a step of identifying a required volume110, identifying the chambers or combination of chambers capable of dosing the required volume 120, selecting a chamber or combination of chambers for dosing the required volume 130 and adjusting the pair of telescopically arranged cylinders to accurately dose the required volume 140.

Identifying a required volume 110 may correspond to the packaging requirements of different products. For example, a first product may be packaged in a first container having a first volume. A second product may be packaged in a second container having a second volume different from the first volume. The required volume may be defined by the packaging requirements of each product.

Identifying the chamber or combination of chambers capable of dosing the required volume 120 may comprise calculating which chamber or combination of chamber can be used to dose the required volume. The first product having the first volume may for example be in the range of volumes of the first chamber 24. The second product having the second volume may be in the range of volumes of the second chamber 26 or the combination of the first chamber 24 and the second chamber 26.

Selecting a chamber or combination of chambers 130 for dosing the required volume may comprise choosing between a single chamber or combination of chambers which have been identified as capable of dosing the required volume. In some examples, a single chamber is chosen for dosing a required volume. Selecting a chamber or combination of chambers may also comprise plugging the chambers which are not selected, for example by inserting a closing element in the chambers which are not selected.

Adjusting the pair of telescopically arranged cylinders 140 may comprise positioning the pair of telescopically arranged cylinders in the retracted position, the deployed position or an intermediate position between the retracted and the deployed position. Adjusting the pairs of cylinders 12, 14 may be achieved by sliding one of the cylinders of each pair relative to the other. Adjusting the pairs of cylinders 12, 14 enables the required volume to be accurately defined by the selected chamber or combination of chambers.

Figure 9 illustrates a volumetric filling method 200. The volumetric method 200 may comprise the method 100 for adjusting the volume of granular or powder detergent product. The volumetric filling method 200 may also comprise rotating 210 the rotary table 36 around the central axis to sequentially fill the selected chamber or combination of chambers with powder or granular detergent material and discharge the powder or granular detergent material into packaging containers. The rotation may be continuous, such that productivity is increased.

The applicant notes that the formulation "element A and/or element B" covers embodiments having element A alone, element B alone, or elements A and B taken together.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A telescopic dosing cup (10) for a volumetric filling machine (34) configured to measure and/or dose a volume of a powder or granular detergent material, the telescopic dosing cup (10) comprising:
- at least a first pair of telescopically arranged cylinders (12) and a second pair of telescopically arranged cylinders (14), the first and second pair of telescopically arranged cylinders (12, 14) being configured to be mounted to a rotary table (36), the cylinders of each pair being configured to slide relative to each other along an axis normal to a base plane defined by the rotary table (36);
- a first chamber (24) defined by the first pair of telescopically arranged cylinders (12), the first chamber (24) being configured to hold and transport a first volume (V1) of the powder or granular detergent material;
- a second chamber (26) defined by the second pair of telescopically arranged cylinders (14), the second chamber (26) being configured to hold and transport a second volume (V2) of the powder or granular detergent material,
wherein the first volume (V1) and the second volume (V2) are adjustable by relative sliding movement of the cylinders in each pair, and wherein the first volume (V1) is different from the second volume (V2).

2. The telescopic dosing cup (10) of claim 1, wherein the first pair of cylinders (12) and the second pair of cylinders (14) are in a fixed relationship, such that the first and second volumes (V1, V2) are adjusted simultaneously.

3. The telescopic dosing cup (10) of any claim 1 or 2, wherein each pair of cylinders (12, 14) comprises an upper cylinder (16), and the telescopic dosing cup (10) comprises a dedicated base plate (20) configured to be mounted to the rotary table (36), and the upper cylinder (16) of each pair of cylinders (12, 14) is mounted to the respective dedicated base plate (20).

4. The telescopic dosing cup (10) of any of claims 1 to 3, wherein the cylinders in each pair are slidable between a contracted position and a deployed position, and a ratio of the first volume in the contracted position to the first volume in the deployed position, and the ratio of the second volume in the contracted position to the second volume in the deployed position, is in a range between 2:1 and 3:1.

5. The telescopic dosing cup (10) of any of claims 1 to 4, wherein each chamber (24, 26) comprises an inlet section (28) configured to receive the powder or granular material and an outlet section (30) configured to dispense the powder or granular material, and the cross-section of the inlet section (28) of each of the first chamber (24) and the second chamber (26) is identical.

6. The telescopic dosing cup (10) of claim 5, further comprising a closing element (32) removably and selectively insertable into the inlet section (28) of each chamber (24, 26).

7. The telescopic dosing cup (10) of any of claims 1 to 6, wherein the first chamber (24) has a circular cross-section, and the second chamber (26) comprises a first segment (26A) having the circular cross-section, and a second section (26B) having an oblong cross-section.

8. The telescopic dosing cup (10) of any of claims 1 to 7, further comprising a gate, the gate being operable between a closed position wherein the powder or granular detergent material is retained in at least one of the first and the second chamber (24, 26) and an open position wherein the powder or granular detergent material can flow through the at least one of the first and the second chamber (24,26).

9. The telescopic dosing cup (10) of any of claims 1 to 8, wherein a range of relative sliding movement of the first pair of telescopically arranged cylinders (12) and the second pair of telescopically arranged cylinders (14) is between 50 mm and 200 mm.

10. The telescopic dosing cup (10) of any of claims 1 to 9, further comprising a third pair of telescopically arranged cylinders.

11. A volumetric filling machine (34) comprising
- rotary table (36) configured to rotate about a central axis;
- at least one telescopic dosing cup (10) according to any of claims 1 to 10 mounted to the rotary table (36) to rotate with the rotary table (36) about the central axis;
- a filling area (38) extending over a portion of the rotary table (36), the filling area (38) being configured for filling at least one of the first chamber (24) and the second chamber (26) of each telescopic dosing cup (10) with powder or granular detergent material during rotation of the rotary table (34) about the central axis; and
- a discharge area (42) extending over another portion of the rotary table (36), the discharge area (42) being configured to discharge the powder or granular detergent material from at least one of the first chamber (24) and the second chamber (26) of each telescopic dosing cup (10) into a package during rotation of the rotary table (36) about the central axis.

12. The volumetric filling machine (34) of claim 11, comprising between 5 and 20 telescopic dosing cups (10) regularly angularly spaced around the central axis.

13. A method (100) for adjusting a volume of granular or powder detergent product using the telescopic dosing cup (10) of claims 1 to 10 comprising:
- defining a required volume of the powder or granular material to be packaged;
- identifying which of the first chamber (24), the second chamber (26) or the combination of the first and second chambers (24, 26) has the capacity to dose the required volume;
- selecting the first chamber (24), the second chamber (26) or the combination of the first and second chambers (24, 26) for dosing the required volume according to the identification;
- adjusting the first volume (V1) and/or the second volume (V2) by telescoping the first and/or second pairs of telescopically (12, 14) arranged cylinders so that the selected chamber or combination of chambers is adapted to dose the required volume.

14. The method (100) according to claim 13, wherein selecting the first chamber (24) comprises inserting a closing element (32) in an inlet section (28) of the second chamber (26) and selecting the second chamber (26) comprises inserting a closing element (32) in an inlet section (28) of the first chamber (24).

15. A volumetric filling method (200) comprising:
- adjusting the volume of granular or powder detergent product according to the method (100) of claims 13 or 14; and
- rotating a rotary table (36) to sequentially fill the first chamber (24), the second chamber (26) or the combination of the first and second chambers (24, 26) of each telescopic dosing cup (20) with the powder or granular material detergent product, and to discharge the powder or granular material detergent product from the first chamber (24), the second chamber (26) or the combination of the first and second chambers (24, 26) into a package.
